# EUROPEAN PATENT SPECIFICATION

(11) **EP 1 350 827 B1**
(45) Date of publication and mention of the grant of the patent: **01.07.2009**
(21) Application number: 01270578.6
(22) Date of filing: 11.12.2001
(51) Int. Cl.: C09K 3/14, B24B 37/00, B24B 57/02, G11B 5/84, G11B 7/26

(54) **ABRASIVE, ABRASIVE SLURRY, AND METHOD FOR MANUFACTURING ABRASIVE**
SCHLEIFMITTEL, SCHLEIFMITTELSUSPENSION SOWIE VERFAHREN ZUR HERSTELLUNG EINES SCHLEIFMITTELS
ABRASIF, BOUE ABRASIVE, ET PROCEDE DE FABRICATION D'UN ABRASIF

(30) Priority: 12.12.2000 JP 2000378119; 05.04.2001 JP 2001107311
(43) Date of publication of application: 08.10.2003
(73) Proprietor: Showa Denko K.K., Tokyo 105-8518 (JP)
(72) Inventor: ITO, Katsura, Shiojiri-shi, Nagano 399-6461 (JP); SAEGUSA, Hiroshi, Shiojiri-shi, Nagano 399-6461 (JP); MASUDA, Tomoyuki, Shiojiri-shi, Nagano 399-6461 (JP); IMAI, Fumio, Shiojiri-shi, Nagano 399-6461 (JP)
(74) Representative: Bradley, Adrian
(86) International application number: PCT/JP2001/010850
(87) International publication number: WO 2002/048279

(56) References cited:
- EP-A2- 0 941 973
- JP-A- 8 252 766
- JP-A- 2000 163 740
- JP-A- 2001 062 705
- JP-A- 2001 323 254
- US-A1- 2001 017 007

## Description

### Technical Field:

The present invention relates to an abrasive for use in accurate polishing of optical device substrates or electronics substrates, such as glass substrates for producing optical lenses, optical disks, magnetic disks, plasma-display devices, liquid crystal devices and LSI photomasks. More particularly, the invention relates to an abrasive which is endowed with excellent polishing properties including a removal rate (polishing speed) and which allows an object to be polished without generating substantial surface defects, such as scratches, to abrasive slurry containing the abrasive and to a method for producing the abrasive.

### Background Art:

In recent years, polishing technique has become more and more important in the fields of electronics substrates, such as glass substrates for magnetic disks, for liquid crystal displays including thin-film transistor (TFT) type LCDs and twisted nematic (TN) type LCDs, for color filters of liquid crystal television displays and for LSI photomasks.

Particularly, in the field of magnetic disk substrates, there are demands for substrate-thickness reduction in keeping with the trend in weight reduction and for high mechanical performance, particularly high rigidity, so as to withstand deformation of the disk during high-speed rotation. In addition, there is also a strong demand for high recording density. In order to attain high recording density, the flying height of a magnetic head to a magnetic disk substrate has been reduced to a great extent. In order to attain such a low height, the magnetic disk substrates must have high flatness and small surface roughness like a mirror surface, and surface defects, such as micro-scratches and micro-pits, must be removed to the utmost. Thus, surface polishing must be performed at high accuracy. In order to meet the aforementioned demands for reduced thickness, high mechanical performance and high recording density, various improvements have been made in the chemical composition of glass and in the method for producing glass. Specifically, in addition to chemically reinforced glass, there have conventionally been developed, as glass substrates, glass-ceramic substrates predominantly containing lithium silicate and glass-ceramic substrates containing quartz crystals as a major component. However, these glass substrates have considerably poor processability, and therefore, when a conventional abrasive is used to polish such substrates, the processing speed is low to thereby deteriorate productivity.

Conventionally, in order to perform surface-polishing of a glass substrate, there has been employed an abrasive predominantly comprising rare earth metal oxide, *inter alia*, cerium oxide, since cerium oxide exhibits a removal rate several times that of iron oxide, zirconium oxide or silicon dioxide. During use of such an abrasive, abrasive particles are generally dispersed in water or other liquid. When such an abrasive is used to perform surface polishing, there is a demand for attaining both the highly accurate surface polishing performance and the high removal rate.

A variety of measures for increasing the removal rate are disclosed in the case where cerium oxide is used as an abrasive. For example, JP-B SHO 38-3643 discloses a polishing method in which colloidal silica, alumina, or a similar substance is added to cerium oxide or a similar substance. JP-A HEI 3-146585 discloses an abrasive that comprises cerium oxide as a predominant component and magnesium chloride. However, employment of a sol-form abrasive comprising particles of different species leads to an increase in surface scratches or pits, failing to yield a high-quality surface.

JP-A HEI 8-3541 discloses an alkaline ceria sol abrasive containing an organic acid having at least two carboxyl groups for attaining a high-quality surface. JP 8252766 discloses a diamond abrasive, comprising coarse particles having a volume cumulative (50%) particle size (D50) of 0.5 to 10 µm, and a volume cumulative (90%) particle size (D90) to D50 ratio of 1.7 or less. JP-A HEI 8-41443 discloses a polishing composition containing an abrasive having an average particle size of 0.1 to 10 µm (2 to 30 parts by mass) and an alkyl sulfate salt and/or a polyoxyethylene monofatty acid ester (1 to 20 parts by mass). By employment of such abrasives, highly accurate polishing and polishing performance can be attained simultaneously to a certain degree. However, since a large amount of an organic substance must be employed in addition to abrasive particles, production costs increase and stable high-quality is difficult to attain, making employment of such abrasives problematic.

The present invention has been accomplished in order to solve the aforementioned problems, and an object of the present invention is to provide an abrasive which during accurate polishing of electronics substrates and similar substrates, attains a high removal rate and provides a high-quality surface having high flatness, small surface roughness and substantially no micro-scratch or micro-pit.

### Disclosure of the Invention:

The present invention provides an abrasive that comprises particles having a volume-cumulative (95%) average particle size (D95) and particles having a volume-cumulative (50%) average particle size (D50), in which a ratio of the D95 to the D50 (D95/D50) falls within a range of 1.2 to 3.0 wherein the volume-cumulative (95%) average particle size (D95) falls within a range of 0.1 to 1.5 µm and the particles with the D95 contain coarse particles having a size more than 10 times the volume-cumulative (50%) average particle size (D50) in an amount of 1 mass% or less based on a total mass of all the particles, and wherein the abrasive contains, as a predominant component, at least one species selected from the group consisting of cerium oxide, silicon oxide, iron oxide, aluminum oxide and titanium oxide.

The abrasive preferably has a specific surface area of 1 to 50 m²/g.

The cerium oxide is preferably produced using rare earth metal carbonate as a starting material.

The predominant component is preferably contained in the abrasive in an amount of 50 mass% or more.

The present invention further provides abrasive slurry comprising the abrasive in an amount falling within a range of 1 to 50 mass% and a solvent, preferably selected from the group consisting of C1 to C10 monohydric alcohols, glycols, dimethyl sulfoxide, dimethylformamide, tetrahydrofuran and dioxane.

The abrasive slurry preferably has a pH in excess of 10.

The abrasive slurry preferably has an electrical conductivity of at least 2 mS/cm, preferably at least 3 mS/cm, as measured at 20°C under an abrasive concentration of 20 mass%.

The abrasive slurry contains preferably a surfactant preferably selected from the group consisting of an anionic surfactant and a nonionic surfactant; the anionic surfactant is preferably selected from the group consisting of low or high molecular compounds of carboxylic acid salt, sulfonic acid salt, ester sulfate and ester phosphate; and the nonionic surfactant is preferably selected from the group consisting of polyoxyethylene alkylphenol ether, polyoxyethylene alkyl ether and polyoxyethylene fatty acid ester.

The abrasive slurry preferably contains one species selected from the group consisting of phosphate, cellulose ethers and water-soluble high polymers.

The present invention further provides a method for producing the abrasive, comprising a step of drying the abrasive slurry preferably through application into a medium-fluidization layer of a medium-fluidization drier or through spraying against hot air of a spray drier and a step of pulverizing the dried slurry.

The present invention further provides a method for polishing an object using the abrasive slurry. Preferably the object is a glass substrate for producing optical lenses, optical disks, plasma-display devices, liquid crystal devices, color filters of liquid crystal television displays, LSI photomasks or magnetic disks.

Also disclosed is a magnetic disk glass substrate polished with the abrasive to have surface roughness Ra of not more than 4.7 Å and 55 relative latent scratches or less.

By setting the abrasive according to the present invention to comprise particles having a volume-cumulative (95%) average particle size (D95) and particles having a volume-cumulative (50%) average particle size (D50), in which a ratio of the D95 to the D50 (D95/D50) falls within a range of 1.2 to 3.0, it is possible to obtain at a high removal rate a highly accurate surface with very small surface roughness and substantially no micro-scratch or micro-pit, which is demanded in the field of electronics substrates. Though the clear reason for this has not been elucidated, it is conceivable that the large particles of the abrasive maintain the high removal rate and the small particles of the abrasive attain very small surface roughness and substantially no micro-scratch or micro-pit.

### Best Modes for Carrying Out the Invention:

The abrasive of the present invention comprises particles having a volume-cumulative (95%) average particle size (D95) and particles having a volume-cumulative (50%) average particle size (D50), in which a ratio of the D95 to the D50 (D95/D50) falls within a range of 1.2 to 3.0, preferably 1.3 to 2.6, more preferably 1.5 to 2.3. When the D95/D50 is less than 1.2, a desirable removal rate cannot be maintained to increase a difficulty in a pulverization technique, resulting in failure to attain stable production. On the other hand, when the D95/D50 exceeds 3.0, it is difficult to obtain a polished object having substantially no surface defect. To be specific, there cannot be attained a polished product having a surface of considerably high surface flatness, very low surface roughness and having no substantial micro-scratch or micro-pit.

In the abrasive of the present invention, the volume-cumulative (95%) average particle size (D95) is in the range of 0.1 to 1.5 µm and the particles with the D95 contain coarse particles having a size more than 10 times the volume-cumulative (50%) average particle size (D50) in an amount, based on the total mass of all the particles, of 1 mass% or less, preferably 0.5 mass% or less, more preferably 0.5 to 0.001 mass%.

When the amount of the coarse particles based on the total mass of all the particles is in excess of 1 mass%, polished products having no substantial surface defect are difficult to obtain. In other words, there cannot be attained a polished product having a surface of considerably high surface flatness, low surface roughness and having no substantial micro-scratch or micro-pit.

The coarse particle content can be obtained through any method; e.g., a method in which a portion of slurry produced from a relevant abrasive is taken up and repeatedly subjected to centrifugal separation under centrifugal sedimentation conditions including centrifugal force and centrifugation time predetermined in accordance with the particle size which is 10 times D50, and the thus separated coarse particles are removed for measuring the content. Alternatively, the content may be obtained through a method employing a commercial coarse particle size meter.

The expression "volume-cumulative (95%) average particle size (D95)" used herein refers to an average particle size of particles included in a 95% cumulative volume as determined from the undersize particle distribution. Similarly, the expression "volume-cumulative (50%) average particle size (D50)" refers to an average particle size of particles included in a 50% cumulative volume as determined from the undersize particle distribution.

In the present invention, the reason for employment of the aforementioned volume-cumulative (95%) average particle size (D95) instead of the volume-cumulative (100%) average particle size (D100) is that the volume-cumulative (95%) average particle size can be measured in an easy manner while measurement of the volume-cumulative (100%) average particle size (D100) requires a long period of time. Another reason is that no substantial problem arises when D95 is employed instead of D100. Thus, D95 is employed as an alternative to the ideal volume-cumulative (100%) average particle size (D100).

Abrasive particles having a ratio D95/D50 close to 1 are regarded to exhibit a sharp size distribution profile. Since the abrasive particles employed in the present invention have a ratio D95/D50 falling within the range of 1.2 to 3.0, they are regarded as abrasive particles exhibiting a quite sharp size distribution profile. The volume-based particle size distribution can be obtained by use of a particle size distribution measurement apparatus employing laser diffraction, dynamic light scattering, photon correlation or the like.

The clear reason why the high-speed surface polishing is maintained and high-accuracy surface polishing is attained through employment of the aforementioned constitution of the abrasive has not been elucidated. However, a conceivable reason is that the size and amount of the particles of a larger size contained in the abrasive, i.e. the portion of greater size in the particle size distribution, relate largely to the removal rate and polishing accuracy and that the slurry pH is an important fact when reacting the hydroxyl group on the abrasive particle surface with that on the glass surface to be polished.

The abrasive of the present invention contains a predominant component that is preferably at least one species selected from among cerium oxide, silicon oxide, iron oxide, aluminum oxide, and titanium oxide.

Among these components, at least one predominant component is contained preferably in an amount of 50 mass % or more, more preferably 70 mass %. In this case, no particular limitation is imposed on the balance components.

In the present invention, among the aforementioned abrasive components, cerium oxide is particularly preferably employed as the predominant component. More preferably, the predominant component is preferably cerium oxide produced from rare earth metal carbonate serving as a starting material. The abrasive containing as a predominant component cerium oxide which has been produced through the above producing method preferably has a cerium oxide content of 50 mass % or more, more preferably 70 mass % or more. The rare earth metal carbonate is employed as a type of light rare earth metal compounds that predominantly contain cerium and reduced amounts of components other than rare earth metals, e.g. alkali metals.

The rare earth metal carbonate to be employed as a starting material is obtained by milling naturally occurring rare earth concentrate rich in cerium, lanthanum, praseodymium, neodymium, etc.; chemically separating and removing components other than rare earth metals such as alkali metals, alkaline earth metals, and radioactive substances; and forming a carbonate salt by use of a substance such as ammonium bicarbonate or oxalic acid.

The rare earth metal carbonate to be employed as a starting material is obtained by milling naturally occurring rare earth concentrate rich in cerium, lanthanum, praseodymium, neodymium, etc.; chemically separating and removing components other than rare earth metals, such as alkali metals, alkaline earth metals and radioactive substances; and forming a carbonate salt by use of a substance, such as ammonium bicarbonate or oxalic acid.

The rare earth metal carbonate thus obtained is fired at about 500°C to about 1,200°C in an electric furnace or a similar apparatus to form fired powder. The powder is milled to produce an abrasive predominantly containing cerium oxide.

The specific surface area of the abrasive finally obtained can be judged on the basis of the firing conditions. It is preferably 1 to 50 m²/g, particularly preferably 2 to 20 m²/g.

By appropriately choosing conditions, such as firing conditions of the starting material and milling conditions for production, there can be obtained an abrasive having a specific particle size distribution that attains the effect of the present invention.

Slurry containing the abrasive according to the present invention may be produced through a method wherein the fired powder is dispersed in water, a water-soluble organic solvent or a similar medium and the fired powder wet-milled in the dispersion medium. Alternatively, the fired powder is dry-milled, and the resultant powder is wet-dispersed in water or a water-soluble organic solvent. However, in the present invention, a wet milling process carried out by use of, for example, a ball mill is desirably employed. In either the wet-milling or the dry-milling, the ratio D95/D50 of particles having a volume-cumulative (95%) average particle size (D95) to particles having a volume-cumulative (50%) average particle size (D50) is to fall within a range of 1.2 to 3.0.

Examples of the water-soluble organic solvent include C1 to C10 monohydric alcohols, such as methanol, ethanol, propanol, isopropanol and butanol; C3 to C10 polyhydric alcohols, such as ethylene glycol and glycerin; acetone; dimethyl sulfoxide (DMSO); dimethylformamide (DMF); tetrahydrofuran; and dioxane.

The abrasive slurry of the present invention has an abrasive concentration (slurry concentration) of 1 to 50 mass %, preferably 5 to 40 mass %, more preferably 10 to 30 mass %. When the amount of the abrasive in the slurry is less than 1 mass %, sufficient polishing performance is difficult to attain, whereas when the amount is in excess of 50 mass %, the viscosity of the slurry increases, leading to poor fluidization. This readily causes a problem in production and is economically disadvantageous in view of excessive use of abrasive.

The abrasive slurry of the present invention has to have a pH in excess of 10, desirably in excess of 11. When the pH is 10 or less, a desirable polishing rate cannot be attained.

In the present invention, the abrasive slurry preferably has an electrical conductivity of at least 2 mS/cm as measured at 20°C, more preferably not less than 3 mS/cm. When the electrical conductivity is not less than 2 mS/cm, desired polishing performance (in terms of surface roughness, scratches, surface defects, etc. of a substrate) can be attained.

The abrasive slurry of the present invention preferably contains a surfactant serving as a dispersant. Examples of the surfactants preferably used in the present invention include anionic surfactants, cationic surfactants, nonionic surfactants and amphoteric surfactants. These surfactants may be used singly or in combination of two or more species. Of these, anionic surfactants and nonionic surfactants are preferred in the present invention.

Examples of the anionic surfactants include known carboxylate salts (e.g., soap, N-acylamino acid salts, alkyl ether carboxylate salts, acylated peptides); sulfonate salts (e.g., alkanesulfonate salts (including alkylbenzenesulfonate salts) and alkylnaphthalenesulfonate salts, sulfosuccinate salts, α-olefinsulfonate salts, N-acylsulfonate salts); sulfate ester salts (e.g., sulfonated oil, alkyl sulfate salts, alkyl ether sulfate salts, alkyl allyl ether sulfate salts, alkylamide sulfate salts); and phosphate ester salts (e.g., alkyl phosphate salts, alkyl ether phosphate salts, alkyl allyl ether phosphate salts). These salts may have a low molecular weight or a high molecular weight. The term "salt" used herein refers to at least one salt selected from among Li salts, Na salts, K salts, Rb salts, Cs salts, ammonium salts and H-type species.

For example, the soap is a C12 to C18 fatty acid salt generally having a fatty acid moiety derived from lauric acid, myristic acid, palmitic acid, stearic acid, etc. Examples of the N-acylamino acid salts include C12 to C18 N-acyl-N-methylglycine salts and N-acylglutamate salts. Examples of the alkyl ether carboxylate salts include those having 6 to 18 carbon atoms, and examples of the acylated peptides include those having 12 to 18 carbon atoms. Examples of the sulfonate salts include those mentioned above and having 6 to 18 carbon atoms. For example, when the corresponding acid is an alkanesulfonic acid, examples of the acid include laurylsulfonic acid, dioctylsuccinosulfonic acid, benzenesulfonic acid, dodecylbenzenesulfonic acid, myristylsulfonic acid, quelylbenzenesulfonic acid and stearylsulfonic acid. Examples of the sulfate ester salts include those mentioned above and having 6 to 18 carbon atoms. For example, when the corresponding acid is an alkyl sulfuric acid, examples of the acid include lauryl sulfuric acid, dioctylsuccinosulfuric acid, myristyl sulfuric acid, and stearyl sulfuric acid. Examples of the phosphate ester salts include those mentioned above and having 8 to 18 carbon atoms. Examples of the nonionic surfactants include polyoxyethylene alkyl phenol ethers, polyoxyethylene alkyl ethers and polyoxyethylene fatty acid esters. In addition to the aforementioned anionic surfactants and nonionic surfactants, known fluorine-containing surfactants may also be used.

Examples of high polymer surfactants include a specific polycarboxylic acid compound (Poiz 530, product of Kao Corporation).

In order to prevent sedimentation of the abrasive slurry of the present invention or enhance stability of the slurry, the abrasive slurry composition of the present invention may further contain, in addition to the aforementioned surfactants, additives when necessary, such as polymer dispersants including a tripolyphosphate salt; phosphate salts including hexametaphosphate salts; cellulose ethers including methyl cellulose and carboxymethyl cellulose; and water-soluble polymers including polyvinyl alcohol. Generally, these additives are added to the abrasive preferably in amounts of 0.05 to 20 mass %, particularly preferably 0.1 to 10 mass %.

The abrasive of the present invention can be obtained by drying the abrasive slurry of the present invention. No particular limitation is imposed on the drying method so long as secondary aggregation of abrasives contained in the slurry is not formed during drying. Thus, preferably used is a drier of a type that prevents secondary aggregation of abrasive, such as a medium-fluidization drier or a spray drier. The medium-fluidization drier is a type of driers for feeding abrasive slurry into a medium-fluidized layer provided by mobilizing alumina-made or zirconia-made balls by means of hot blast. The spray drier is a type of driers for spraying abrasive slurry into hot blast by means of a two-fluid nozzle or similar means. Through employment of such drying means, an abrasive micropowder exhibiting excellent re-dispersion property and polishing performance can be provided.

The abrasive of the present invention is dispersed, in a desired concentration, in the aforementioned dispersion medium for producing slurry to thereby produce the abrasive slurry of the present invention.

Generally, no particular limitation is imposed on the substrates to which the abrasive slurry of the present invention can be applied. The abrasive slurry is used for finish polishing of a variety of optical, electronics glass material, customary glass products, etc. Specific examples include glass substrates for optical lenses, optical or magnetic disks, plasma-display devices, liquid crystal displays, such as thin-film transistor (TFT) type LCDs and twisted nematic (TN) type LCDs, color filters of liquid crystal television displays and LSI photomasks.

Preferably, the abrasive slurry of the present invention is used specifically to polish a glass substrate for magnetic disks. The glass substrate for magnetic disks has become of interest in that it has advantages, such as a high rigidity for allowing thickness reduction and a high impact resistance. Glass materials, generally divided into chemically reinforced glass and glass ceramics, are used for providing the substrate. Each of these glass materials has been subjected to reinforcement treatment in order to overcome an intrinsic drawback of glass that is fragility. Since scratches occurring in the glass surface usually cause a great decrease in mechanical strength, the glass substrate undergoes chemical reinforcement through ion exchange for enhancing reliability of a disk produced from the substrate. Specifically, a glass substrate (disk substrate) is immersed in an alkaline molten salt to thereby exchange alkali ions present in the glass surface with ions of a larger size present in the molten salt, leading to formation, in the glass surface layer, of a compressive stress layer which greatly enhances fracture strength. In such a chemically reinforced glass substrate, elution of alkali species from the glass is prevented. The abrasive slurry of the present invention attains excellent polishing performance (in terms of surface roughness, scratches, surface defects, etc. of a substrate) to a substrate for HDs formed of the aforementioned chemically reinforced glass material. Examples of preferably employed glass substrates for HDs include aluminosilicate glass substrates containing Li⁺ and Na⁺, sodalime glass substrates containing K⁺ and Na⁺, and glass ceramic substrates.

The present invention will next be described in detail citing examples, which should not be construed as limiting the invention thereto.

### Example 1:

Commercially available crude rare earth metal carbonate powder (ignition loss: 55.8%) in an amount of 4 kg was fired in a box-shaped electric furnace. The following firing conditions were a temperature elevation rate of 1.7°C/min, a firing temperature of 900°C and a retention time of two hours. Elemental analysis of the thus fired powder revealed that the rare earth metal element content was 99 mass % and that the cerium oxide concentration based on all rare earth metal elements was 60 mass %. The specific surface area of the thus produced fired powder, as measured by means of a BET specific surface area measurement apparatus, was 10 m²/g.

The thus obtained fired powder was added in an amount of 1.7 kg to 2.5 kg of pure water, and the resultant mixture was stirred. Subsequently, an anionic surfactant (polycarboxylic acid compound surfactant (Kao Poiz 530, product of Kao Corporation)) was added as a dispersant in an amount of 34 g (corresponding to 2 mass % based on the fired powder) to the mixture, and the resultant mixture was stirred to thereby yield slurry. The thus yielded slurry was subjected to wet milling for 2.5 hours while the slurry was caused to circulate in the wet-milling apparatus. After completion of wet milling, pure water was added to the slurry to thereby yield 8 kg of abrasive slurry having a concentration of 20 mass %. The slurry was found to have an electrical conductivity of 3.5 mS/cm at 20.5°C.

A portion of the obtained abrasive slurry was subjected to particle size measurement by means of a laser-diffraction particle size distribution measurement apparatus (HR 850, product of CILAS). The volume-cumulative 50% average particle size (D50) was found to be 0.55 µm, and the volume-cumulative 95% average particle size (D95) was found to be 0.8 µm. Thus, the ratio D95/D50 was 1.5. Furthermore, the amount of coarse particles having a size exceeding 5.5 µm, which size is more than 10 times the volume-cumulative (50%) average particle size (D50), was found to be 0.72 mass % based on the total mass of all the particles.

By use of the thus obtained abrasive slurry, the below-described object to be processed was polished. The polishing machine and the polishing pad employed were a 4-way double-sided polishing machine (Model 5B, product of Fujikoshi Kikai Kogyo K.K.) and a suede-type pad (Politex DG, product of Rodel), respectively. Polishing was performed for 10 minutes at a slurry-feeding rate of 60 ml/min under an operation pressure of 75 g/cm², with the number of revolutions of the turntable at 90 rpm. After completion of the polishing, the reinforced glass substrate was removed from the polishing machine, washed with pure water under ultrasound application and dried. The glass substrate was evaluated in terms of the following properties. Table 2 shows the results thereof.

In the above polishing, a 2.5-inch-size, aluminosilicate-based, reinforced glass substrate (surface roughness Ra = 9 Å) for magnetic disks was used as an object to be processed (object to be polished). The substrate had been polished in advance by use of a commercially available cerium oxide abrasive (ROX H-1, product of Tohoku Kinzoku Kagaku K.K.).

### Evaluation of the processed object:

### (1) Surface roughness (Ra)

The surface roughness (Ra) of the glass substrate was measured by means of a contact-type surface roughness measurement apparatus, Talystep or Talydata 2000, produced by Rank-Taylor Hobson.

### (2) Surface defects

The surface of the glass substrate was observed under a differential interference microscope, and the surface evaluated in terms of adhesion onto the surface and generation of scratches and pits. The incidence of scratches was evaluated by the number of scratches occurring in the surface of the glass substrate. The incidence of surface defects was evaluated on the basis of three relative ratings of "O" that indicates no substantial pit and favorable surface conditions, "Δ" that indicates small numbers of pits and is problematic in actual use) and "X" that indicates considerably poor surface conditions.

### (3) Removal rate

The removal rate (µm/min) was calculated from the change in weight of the glass substrate before and after polishing.

### Examples 2 to 7:

In each of these Examples, the procedure of Example 1 was repeated, except that the D50, D95 and coarse particle content were changed to the values as shown in Table 1 by appropriately modifying the firing conditions and wet-milling apparatus operation conditions, thereby producing abrasive slurry. The slurry was evaluated in a manner similar to that employed in Example 1. Table 2 shows the results thereof.

### Examples 8 and 9:

In each of these Examples, the procedure of Example 1 was repeated, except that the slurry concentration was changed to 10 mass % or 40 mass% as shown in Table 1 (in the Table mass % is shown as wt%), thereby producing abrasive slurry. The slurry was evaluated in a manner similar to that employed in Example 1. Table 2 shows the results thereof.

### Examples 10 and 11:

In each of these Examples, the procedure of Example 1 was repeated, except that the amount of the added dispersant was changed as shown in Table 1, thereby producing abrasive slurry. The slurry was evaluated in a manner similar to that employed in Example 1. Table 2 shows the results thereof.

### Comparative Example 1:

The procedure of Example 1 was repeated, except that the wet milling was completed in one hour after the initiation, thereby producing abrasive slurry. The obtained fired powder was found to have a D50 of 0.55 µm and a D95 of 1.8 µm, and the slurry adjusted to a concentration of 20 mass % after milling was found to have a pH of 11.9.

The thus obtained slurry was evaluated in a manner similar to that employed in Example 1. Table 2 shows the results thereof.

### Comparative Examples 2 to 6:

In each of these Comparative Examples, the procedure of Example 1 was repeated, except that the BET specific surface-area, D50, D95 and coarse particle content were changed to the values as shown in Table 1 by appropriately modifying firing conditions and wet-milling apparatus operation conditions, thereby producing abrasive slurry. The slurry was evaluated in a manner similar to that employed in Example 1. Table 2 shows the results thereof.

### Example 12:

The procedure of Example 1 was repeated, except that commercially available high-purity cerium oxide was used instead of the rare earth metal carbonate, thereby yielding high-purity cerium oxide with ceria purity of 97%. The fired powder thus obtained was found to have a specific surface area of 12 m²/g.

The thus obtained fired powder was added in an amount of 1.7 kg to 2.5 kg of pure water, 34 g of a dispersant (Kao Poiz 530, trade name) and 10 g of 10% aqueous ammonia were added to the resultant mixture, and the resultant matter was stirred to thereby yield slurry. In a manner similar to that employed in Example 1, abrasive slurry was prepared from the slurry and subjected to evaluation. Table 2 shows the results thereof.

### Examples 13 and 14:

In each of these Examples, the procedure of Example 12 was repeated, except that, as shown in Table 1, iron oxide (Fe₂O₃) or silicon oxide (SiO₂) was used instead of the high-purity cerium oxide, thereby yielding abrasive slurry. The pH of the slurry was adjusted by adding caustic soda. The slurry was found to have a BET specific surface area, D95/D50 and other properties as shown in Table 1. The slurry was evaluated in a manner similar to that employed in Example 12. Table 2 shows the results thereof.

### Example 15:

Cerium oxide abrasive slurry (containing an anionic surfactant) which had been obtained in a manner similar to that employed in Example 1 was dried by means of a medium-fluidization drier to thereby yield abrasive micropowder. Specifically, the abrasive slurry was fed, under control of the feeding amount, into a slurry-drier (Model SFD-05, product of Okawara Seisakusho K.K.) in which 20 kg of zirconia balls 2 mm in diameter were charged in order to dry the slurry to thereby yield abrasive micropowder. The abrasive micropowder was dispersed in water such that the concentration reached 10 mass %, and the resultant dispersion was stirred for one hour. After completion of the stirring, the dispersion was irradiated with ultrasonic waves for 10 minutes. Subsequently, the dispersion was allowed to pass through a 20 µm microsieve, and the weight of the particles remaining on the sieve was measured so as to check the aggregation state. On the sieve, only 5 mass % of the abrasive micropowder that had been charged was found to remain. By use of such abrasive micropowder, cerium oxide abrasive slurry can be obtained with good reproducibility.

**Table 1**

| | Raw material used | BET of fired powder | Particle size of milled powder (µm) | | | Coarse particle content | Slurry concentration | Amount of dispersant added | Slurry pH |
|---|---|---|---|---|---|---|---|---|---|
| | | | D₅₀ | D₉₅ | D₉₅/D₅₀ | | | | |
| Ex. 1 | RE carbonate | 10 m²/g | 0.55 | 0.85 | 1.5 | 0.72 wt.% | 20 wt.% | 2 wt.% | 12.1 |
| Ex. 2 | RE carbonate | 10 | 0.55 | 1.20 | 2.2 | 0.88 | 20 | 2 | 12.3 |
| Ex. 3 | RE carbonate | 10 | 0.55 | 0.70 | 1.3 | 0.68 | 20 | 2 | 12.1 |
| Ex. 4 | RE carbonate | 10 | 0.80 | 1.50 | 1.9 | 0.92 | 20 | 2 | 12.2 |
| Ex. 5 | RE carbonate | 10 | 0.40 | 1.00 | 2.5 | 0.82 | 20 | 2 | 12.4 |
| Ex. 6 | RE carbonate | 5 | 0.59 | 0.92 | 1.6 | 0.70 | 20 | 2 | 12.1 |
| Ex. 7 | RE carbonate | 7 | 0.57 | 0.88 | 1.5 | 0.72 | 20 | 2 | 12.3 |
| Ex. 8 | RE carbonate | 10 | 0.55 | 0.85 | 1.5 | 0.78 | 10 | 2 | 12.3 |
| Ex. 9 | RE carbonate | 10 | 0.55 | 0.85 | 1.5 | 0.69 | 40 | 2 | 12.2 |
| Ex. 10 | RE carbonate | 10 | 0.55 | 0.85 | 1.5 | 0.77 | 20 | 1 | 12.2 |
| Ex. 11 | RE carbonate | 10 | 0.55 | 0.85 | 1.5 | 0.86 | 20 | 5 | 12.1 |
| Ex. 12 | Highly pure | 12 | 0.57 | 0.77 | 1.35 | | 20 | 2.0 | 10.1 |
| | CeO₃ | | | | | | | | |
| Ex. 13 | Fe₂O₃ | 15 | 0.25 | 0.49 | 2.0 | | 20 | 2.5 | 10.5 |
| Ex. 14 | SiO₂ | 40 | 0.11 | 0.28 | 2.5 | | 20 | 3 | 10.2 |
| Comp. Ex. 1 | RE carbonate | 10 m²/g | 0.55 | 1.80 | 3.3 | 1.24 wt.% | 20 wt.% | 2 wt.% | 11.9 |
| Comp. Ex. 2 | RE carbonate | 2 | 1.20 | 3.8 | 3.2 | 2.15 | 20 | 2 | 11.8 |
| Comp. Ex. 3 | RE carbonate | 2 | 0.80 | 3.1 | 3.9 | 1.30 | 20 | 2 | 11.8 |
| Comp. Ex. 4 | RE carbonate | 22 | 0.50 | 2.5 | 5.0 | 1.22 | 20 | 2 | 10.2 |
| Comp. Ex. 5 | RE carbonate | 22 | 0.54 | 1.7 | 3.1 | 1.78 | 20 | 1 | 9.6 |
| Comp. Ex. 6 | RE carbonate | 10 | 0.55 | 0.63 | 1.1 | 2.50 | 20 | None | 8.5 |

**Table 2**

| | Conductivity of slurry (mS/cm) | Removal rate (µm/min) | Surface roughness (Ra) (Å) | Scratches (Relative incidence) (No./sheet) | Surface defects (Relative evaluation) |
|---|---|---|---|---|---|
| Ex. 1 | 3.5 | 0.71 | 4.2 | 30 | O |
| Ex. 2 | 3.5 | 0.75 | 4.3 | 35 | O |
| Ex. 3 | 3.5 | 0.70 | 4.1 | 27 | O |
| Ex. 4 | 3.5 | 0.82 | 4.4 | 40 | O |
| Ex. 5 | 3.4 | 0.70 | 4.2 | 33 | O |
| Ex. 6 | 3.6 | 0.80 | 4.5 | 30 | O |
| Ex. 7 | 3.5 | 0.76 | 4.3 | 30 | O |
| Ex. 8 | 3.6 | 0.72 | 4.2 | 30 | O |
| Ex. 9 | 3.5 | 0.71 | 4.2 | 32 | O |
| Ex. 10 | 3.1 | 0.70 | 4.2 | 33 | O |
| Ex. 11 | 3.6 | 0.68 | 4.1 | 34 | O |
| Ex. 12 | 3.3 | 0.73 | 4.0 | 22 | O |
| Ex. 13 | 3.6 | 0.49 | 4.7 | 55 | O |
| Ex. 14 | 3.2 | 0.31 | 2.5 | 18 | O |
| Comp. Ex. 1 | 2.8 | 0.76 | 4.7 | 105 | X |
| Comp. Ex. 2 | 2.8 | 0.85 | 5.2 | 150 | X |
| Comp. Ex. 3 | 2.8 | 0.83 | 5.0 | 130 | X |
| Comp. Ex. 4 | 2.6 | 0.63 | 4.7 | 39 | Δ |
| Comp. Ex. 5 | 2.1 | 0.78 | 5.5 | 120 | X |
| Comp. Ex. 6 | 1.8 | Not measurable | Not measurable | Not measurable | X |

As is apparent from Tables 1 and 2, when the abrasive slurry of each of Examples 1 to 14 is employed in polishing, there can be attained a high removal rate and a favorable polished surface having a small surface roughness and few scratches or surface defects.

In contrast, when polishing is performed by use of the abrasive slurry of each of Comparative Examples 1 to 6, at least one of surface roughness, scratch generation and surface defect generation is unsatisfactory, failing to attain a high-quality polished surface. In addition, the abrasive slurry of each of Comparative Examples 2 and 3 has been found to provide a low removal rate when used in polishing.

### Industrial Applicability:

As described hereinabove, according to the present invention, there can be provided an abrasive and abrasive slurry which attain, during polishing of electronics substrates, particularly glass substrates for magnetic disks, highly accurate surface polishing and a high removal rate. The substrate surface thus polished has high flatness, small surface roughness and substantially no micro-scratch or micro-pit and, therefore, is a high-quality surface.

## Claims

1. An abrasive that comprises particles wherein a ratio of a volume-cumulative (95%) average particle size (D95) to a volume-cumulative (50%) average particle size (D50) falls within a range of 1.2 to 3.0 wherein,
the D95 particles fall within a range of 0.1 to 1.5µm and the particles contain coarse particles having a size more than 10 times the D50 in an amount of 1 mass% or less based on a total mass of all the particles,
and wherein it contains, as a predominant component, at least one species selected from the group consisting of cerium oxide, silicon oxide, iron oxide, aluminum oxide and titanium oxide.

2. The abrasive according to claim 1 which has a specific surface area of 1 to 50 m²/g.

3. The abrasive according to either of claims 1 or 2 wherein it contains, as a predominant component, cerium oxide produced using rare earth metal carbonate as a starting material.

4. The abrasive according to any one of claims 1 to 3 , wherein the predominant component is contained in an amount of 50 mass% or more.

5. Abrasive slurry comprising the abrasive according to any one of claims 1 to 4 in an amount falling within a range of 1 to 50 mass% and a solvent.

6. The slurry according to claim 5 , wherein the solvent is selected from the group consisting of water, C1 to C10 monohydric alcohols, glycols, C3 to C10 polyhydric alcohols, dimethyl sulfoxide, dimethylformamide, tetrahydrofuran and dioxane.

7. The abrasive slurry according to claim 5 , wherein it has a pH in excess of 10.

8. The abrasive slurry according to any one of claims 5 to 7 , wherein it has an electrical conductivity of at least 2 mS/cm, as measured at 20 °C under an abrasive concentration of 20 mass %.

9. The abrasive slurry according to any one of claims 5 to 7 , wherein it has an electrical conductivity of at least 3 mS/cm, as measured at 20°C under an abrasive concentration of 20 mass %.

10. The abrasive slurry according to any one of claims 5 to 9 , further containing a surfactant.

11. The abrasive slurry according to claim 10 , wherein the surfactant is at least one species selected from the group consisting of an anionic surfactant and a nonionic surfactant.

12. The abrasive slurry according to claim 11 , wherein the anionic surfactant is selected from the group consisting of low or high molecular compounds of carboxylic acid salt, sulfonic acid salt, ester sulfate and ester phosphate.

13. The abrasive slurry according to claim 11 , wherein the nonionic surfactant is selected from the group consisting of polyoxyethylene alkylphenol ether, polyoxyethylene alkyl ether and polyoxyethylene fatty acid ester.

14. The abrasive slurry according to any one of claims 5 to 13 , wherein it contains at least one species selected from the group consisting of phosphate, cellulose ethers and water-soluble high polymers.

15. A method for producing an abrasive, comprising a step of drying the abrasive slurry according to any one of claims 5 to 14 and a step of pulverizing the dried slurry.

16. The method according to claim 15, wherein the abrasive slurry is dried using a medium-fluidization drier or spray dryer.

17. The method according to claim 16, wherein the medium fluidization drier has a medium-fluidization layer to which the abrasive slurry is applied, or the spray drier has hot air against which the abrasive slurry is sprayed.

18. A method for polishing an object using the abrasive slurry according to any one of claims 5 to 14.

19. The method according to claim 18 , wherein the object is a glass substrate for producing one species selected from the group consisting of optical lenses, optical disks, plasma-display devices, liquid crystal devices, color filters of liquid crystal television displays and LSI photomasks.

20. The method according to claim 18, wherein the object is a glass substrate for producing magnetic disks.

## Patentansprüche

1. Ein Partikel umfassendes Schleifmittel, in dem ein Verhältnis eines kumulativen Volumens (95 %) mittlerer Partikelgröße (D95) zu einem kumulativen Volumen (50 %) mittlerer Partikelgröße (D50) in einen Bereich von 1,2 bis 3,0 fällt, in dem
die D95 Partikel in einen Bereich von 0,1 bis 1,5 µm fallen und die Partikel grobkörnige Partikel mit einer Größe, die mehr als das Zehnfache der D50 beträgt, sowie in einer Menge von 1 Massenprozent oder weniger aufweisen, basierend auf einer Gesamtmasse aller Partikel,
und in dem das Schleifmittel als eine vorherrschende Komponente mindestens eine Art aufweist, die ausgewählt ist aus der Gruppe bestehend aus Ceroxid, Siliziumoxid, Eisenoxid, Aluminiumoxid und Titanoxid.

2. Das Schleifmittel gemäß Anspruch 1, das einen spezifischen Oberflächenbereich von 1 bis 50 m²/g aufweist.

3. Das Schleifmittel gemäß entweder Anspruch 1 oder 2, in dem das Schleifmittel als eine vorherrschende Komponente Ceroxid beinhaltet, das unter Verwendung eines seltenen Erdmetallkarbonats als ein Ausgangsmaterial hergestellt wurde.

4. Das Schleifmittel gemäß einem der Ansprüche 1 bis 3, in dem die vorherrschende Komponente in einer Menge von 50 Massenprozent oder mehr beinhaltet ist.

5. Schleifflüssigkeit, umfassend das Schleifmittel gemäß einem der Ansprüche 1 bis 4 in einer Menge, die innerhalb eines Bereichs von 1 bis 50 Massenprozent liegt, sowie ein Lösungsmittel.

6. Die Flüssigkeit gemäß Anspruch 5, in der das Lösungsmittel ausgewählt ist aus der Gruppe bestehend aus Wasser, C1 bis C10 monohydrischen Alkoholen, Glykolen, C3 bis C10 polyhydrischen Alkoholen, Dimethylsulfoxid, Dimethylformamid, Tetrahydrofuran und Dioxan.

7. Die Schleifflüssigkeit gemäß Anspruch 5, die einen pH größer 10 aufweist.

8. Die Schleifflüssigkeit gemäß einem der Ansprüche 5 bis 7, die eine elektrische Leitfähigkeit von mindestens 2 mS/cm aufweist, wenn sie bei 20 °C mit einer Schleifmittelkonzentration von 20 Massenprozent gemessen wurde.

9. Die Schleifflüssigkeit gemäß einem der Ansprüche 5 bis 7, die eine elektrische Leitfähigkeit von mindestens 3 mS/cm aufweist, wenn sie bei 20 °C mit einer Schleifmittelkonzentration von 20 Massenprozent gemessen wurde.

10. Die Schleifflüssigkeit gemäß einem der Ansprüche 5 bis 9, weiterhin umfassend ein Tensid.

11. Die Schleifflüssigkeit gemäß Anspruch 10, in der das Tensid mindestens eine Art ist, die ausgewählt ist aus der Gruppe bestehend aus einem anionischen Tensid und einem nichtionischen Tensid.

12. Die Schleifflüssigkeit gemäß Anspruch 11, in der das anionische Tensid ausgewählt ist aus der Gruppe bestehend aus niedrig oder hoch molekularen Verbindungen von Karbonsäuresalz, Sulfonsäuresalz, Sulfatester und Phosphatester.

13. Die Schleifflüssigkeit gemäß Anspruch 11, in der das nichtionische Tensid ausgewählt ist aus der Gruppe bestehend aus Polyoxyethylenalkylphenolether, Polyoxyethylenalkylether und Polyoxyethylenfettsäureester.

14. Die Schleifflüssigkeit gemäß einem der Ansprüche 5 bis 13, die mindestens eine Art aufweist, die ausgewählt ist aus der Gruppe bestehend aus Phosphat, Zelluloseethern und wasserlöslichen Hochpolymeren.

15. Ein Verfahren zum Herstellen eines Schleifmittels, umfassend einen Schritt des Trocknens der Schleifflüssigkeit gemäß einem der Ansprüche 5 bis 14 sowie einen Schritt des Pulverisierens der getrockneten Flüssigkeit.

16. Das Verfahren gemäß Anspruch 15, in dem die Schleifflüssigkeit unter Verwendung eines Durchschnittswirbelschichttrockners oder Sprühtrockners getrocknet wird.

17. Das Verfahren gemäß Anspruch 16, in dem der Durchschnittswirbelschichttrockner eine Durchschnittswirbelschicht aufweist, auf die die Schleifflüssigkeit aufgebracht wird, oder der Sprühtrockner weist heiße Luft auf, gegen die die Schleifflüssigkeit gesprüht wird.

18. Ein Verfahren zum Polieren eines Gegenstandes unter Verwendung der Schleifflüssigkeit gemäß einem der Ansprüche 5 bis 14.

19. Das Verfahren gemäß Anspruch 18, in dem der Gegenstand ein Glassubstrat zum Herstellen einer Art ist, die ausgewählt ist aus der Gruppe bestehend aus optischen Linsen, optischen Scheiben, Plasmaanzeigevorrichtungen, Flüssigkristallvorrichtungen, Farbfiltern von Flüssigkristallfernsehanzeigen sowie LSI Fotomasken.

20. Das Verfahren gemäß Anspruch 18, in dem der Gegenstand ein Glassubstrat zum Herstellen magnetischer Scheiben ist.

## Revendications

1. Abrasif qui comprend des particules, dans lequel un rapport entre une taille moyenne de particule (D95) cumulative en volume (95 %) et une taille moyenne de particule (D50) cumulative en volume (50 %) se situe dans une plage de 1,2 à 3,0, dans lequel,
les particules D95 se situent dans une plage de 0,1 à à 1,5 µm et les particules contiennent des particules grossières ayant une taille supérieure à 10 fois les D50 en une quantité de 1 % en masse ou moins sur la base de la masse totale de toutes les particules,
et qui contient, en tant que composant prédominant, au moins une espèce choisie dans le groupe constitué par l'oxyde de cérium, l'oxyde de silicium, l'oxyde de fer, l'oxyde d'aluminium et l'oxyde de titane.

2. Abrasif selon la revendication 1, qui présente une surface spécifique de 1 à 50 m²/g.

3. Abrasif selon l'une ou l'autre des revendications 1 et 2, qui contient, en tant que composant prédominant, de l'oxyde de cérium produit en utilisant un carbonate de métal de terres rares en tant que matière de départ.

4. Abrasif selon l'une quelconque des revendications 1 à 3, dans lequel le composant prédominant est contenu en une quantité de 50 % en masse ou plus.

5. Suspension épaisse abrasive comprenant l'abrasif selon l'une quelconque des revendications 1 à 4 en une quantité située dans une plage allant de 1 à 50 % en masse et un solvant.

6. Suspension épaisse selon la revendication 5, dans laquelle le solvant est choisi dans le groupe constitué par l'eau, les alcools monohydriques en C₁ à C₁₀, les glycols, les alcools polyhydriques en C₃ à C₁₀, le diméthylsulfoxyde, le diméthylformamide, le tétrahydrofurane et le dioxane.

7. Suspension épaisse abrasive selon la revendication 5, qui présente un pH supérieur à 10.

8. Suspension épaisse abrasive selon l'une quelconque des revendications 5 à 7, qui présente une conductivité électrique d'au moins 2 mS/cm, mesurée à 20 °C dans une concentration d'abrasif de 20 % en masse.

9. Suspension épaisse abrasive selon l'une quelconque des revendications 5 à 7, qui présente une conductivité électrique d'au moins 3 mS/cm, mesurée à 20 °C dans une concentration d'abrasif de 20 % en masse.

10. Suspension épaisse abrasive selon l'une quelconque des revendications 5 à 9, contenant en outre un agent tensioactif.

11. Suspension épaisse abrasive selon la revendication 10, dans laquelle l'agent tensioactif est au moins une espèce choisie dans le groupe constitué par un agent tensioactif anionique et un agent tensioactif non ionique.

12. Suspension épaisse abrasive selon la revendication 11, dans laquelle l'agent tensioactif anionique est choisi dans le groupe constitué par des composés de poids moléculaire faible ou élevé d'un sel d'acide carboxylique, d'un sel d'acide sulfonique, d'un sulfate d'ester et d'un phosphate d'ester.

13. Suspension épaisse abrasive selon la revendication 11, dans laquelle l'agent tensioactif non ionique est choisi dans le groupe constitué par le polyoxyéthylène alkyl phénol éther, le polyoxyéthylène alkyl éther et un ester d'acide gras de polyoxyéthylène.

14. Suspension épaisse abrasive selon l'une quelconque des revendications 5 à 13, qui contient au moins une espèce choisie dans le groupe constitué par un phosphate, des éthers de cellulose et de hauts polymères hydrosolubles.

15. Procédé de production d'un abrasif, comprenant une étape de séchage de la suspension épaisse abrasive selon l'une quelconque des revendications 5 à 14 et une étape de pulvérisation de la suspension épaisse séchée.

16. Procédé selon la revendication 15, dans lequel la suspension épaisse abrasive est séchée en utilisant un dispositif de séchage à fluidisation moyenne ou un dispositif de séchage par pulvérisation.

17. Procédé selon la revendication 16, dans lequel le dispositif de séchage à fluidisation moyenne présente une couche de fluidisation moyenne sur laquelle la suspension épaisse abrasive est appliquée, ou le dispositif de séchage par pulvérisation comporte de l'air chaud contre lequel la suspension épaisse abrasive est pulvérisée.

18. Procédé de polissage d'un objet utilisant la suspension épaisse abrasive selon l'une quelconque des revendications 5 à 14.

19. Procédé selon la revendication 18, dans lequel l'objet est un substrat en verre pour produire une espèce choisie dans le groupe constitué par les lentilles optiques, les disques optiques, les dispositifs d'écran plasma, les dispositifs à cristaux liquides, les filtres couleur d'écrans de télévision à cristaux liquides et les masques photographiques LSI.

20. Procédé selon la revendication 18, dans lequel l'objet est un substrat en verre pour la production de disques magnétiques.
